# FASCICULE DE BREVET EUROPEEN

(11) **EP 1 773 728 B1**
(45) Date de publication et mention de la délivrance du brevet: **18.02.2009**
(21) Numéro de dépôt: 05857323.9
(22) Date de dépôt: 24.06.2005
(51) Int. Cl.: C03C 13/00, C08J 5/08

(54) **MATIERE PLASTIQUE RENFORCEE PAR DES FILS DE VERRE RESISTANT A LA CORROSION**
KORROSIONSBESTÄNDIGES GLASFASERVERSTÄRKTES KUNSTSTOFFMATERIAL
CORROSION-RESISTANT FIBERGLASS-REINFORCED PLASTIC MATERIAL

(30) Priorité: 24.06.2004 FR 0406949
(43) Date de publication de la demande: 18.04.2007
(73) Titulaire: Saint Gobain Vetrotex France S.A., 73000 Chambéry (FR)
(72) Inventeur: BERTHEREAU, Anne, F-73490 La Ravoire (FR); DALLIES, Eric, 73490 La Ravoire (FR)
(74) Mandataire: Joly, Jean-Jacques
(86) Numéro de dépôt international: PCT/FR2005/050489
(87) Numéro de publication internationale: WO 2006/090030

(56) Documents cités:
- DD-A5- 293 105
- GB-A- 965 018
- SU-A1- 1 512 938

## Description

L'invention concerne l'utilisation de fils de verre pour le renforcement de matières plastiques présentant une résistance améliorée aux substances corrosives, notamment basiques et acides.

Les matières plastiques sont utilisées dans divers domaines, par exemple pour former des pièces en tout genre, structurelles ou de revêtement, qui sont destinées à être en contact avec des substances corrosives. Il est bien connu que l'on peut améliorer les propriétés mécaniques de ces matières plastiques en leur incorporant des fibres de verre et obtenir ainsi des pièces renforcées plus communément appelées « composites ».

Les fils situés à la surface des composites ne sont pas tous protégés par la matière plastique qui forme la matrice et ceux qui sont directement en contact avec la substance corrosive sont dégradés à plus ou moins long terme. Par ailleurs, la substance corrosive peut diffuser dans la matrice et ainsi atteindre les fils de verre de renfort sous-jacents. Il est admis que la dégradation de ces fils résulte de la dissolution du verre par la matière corrosive et que la dissolution est d'autant plus rapide que la teneur en substance corrosive est élevée.

Lorsqu'ils sont dégradés, les fils de verre n'assurent plus correctement leur fonction de renforcement : les propriétés mécaniques du composite, notamment le module, la résistance en traction et l'allongement à la rupture, sont diminuées. La matière plastique insuffisamment renforcée présente alors des déformations locales entraînant des ruptures de la matière et la libération de la substance corrosive soit directement dans le milieu extérieur s'il s'agit de pièces structurelles telles que des tuyaux et des citernes, soit à l'interface du composite et de la matière à protéger si celui-ci est employé comme revêtement.

La présente invention a pour but de remédier aux inconvénients précités en proposant d'améliorer la résistance des composites aux substances corrosives par l'ajout de fils de verre de renforcement de composition suivante, exprimée en pourcentage molaire :

| | |
|---|---|
| SiO₂ | 62-75 |
| ZrO₂ | 7-11 |
| Na₂O | 13-23 |
| R'O | 1-10 |
| Al₂O₃ | 0-4 |
| B₂O₃ | 0-6 |
| Fe₂O₃ | 0-5 |
| CaF₂ | 0,5-2 |
| TiO₂ | 0,1-4 |

dans laquelle :
R'O = oxydes de métal alcalino-terreux + MnO + ZnO
et la composition renfermant moins de 0,1 % de K₂O et/ou de Li₂O.

La valeur de 0,1 % susmentionnée est à comprendre comme représentant la teneur maximale en K₂O et Li₂O apportés en tant qu'impuretés par les matières premières servant à l'élaboration du verre, et non pas à un ajout volontaire. De préférence, la composition de verre est dénuée de K₂O et de Li₂O.

De manière classique, les fils de verre sont obtenus par étirement mécanique d'une multiplicité de filets de verre s'écoulant d'une filière remplie de verre en fusion de manière à former des filaments qui sont ensuite rassemblés en au moins un fil, ledit fil étant généralement collecté sous forme d'enroulement au moyen d'un dispositif approprié tel qu'un bobinoir. Il existe plusieurs présentations du fil : sous forme de stratifil (« roving » en anglais), de fil coupé, de mat de fils continus ou coupés, de grille, de voile, de tissu ou de tricot.

Classiquement, on définit la plage de travail par la différence entre la température de formage mesurée pour une viscosité η égale à 10³ Poises (notée T_{Log η=3}) et la température au liquidus (notée T_{Liq}). Elle est ici au moins égale à 40°C, ce qui est suffisant pour que le fibrage s'effectue dans de bonnes conditions, et de préférence est au moins égale à 100°C. En outre, la température de formage est au maximum de 1320°C, de préférence est inférieure ou égale à 1300°C, correspondant à une température tout à fait acceptable car ne nécessitant pas de chauffer le verre de manière trop intense et permettant de réduire au minimum l'usure de la filière.

Avant leur rassemblement en fil(s), il est possible d'associer aux filaments de verre des filaments d'une matière organique thermoplastique venant d'une filière adaptée à la production de tels filaments de manière à former un fil composite dans lequel les deux types de filaments sont intimement mêlés. Des procédés permettant d'obtenir un tel fil sont décrits par exemple dans EP-A- 0 505 275, FR 2 674 260, EP-A- 0 599 695, EP-A- 0 616 055, WO 98/01751 et WO 02/31235. La proportion maximale de filaments thermoplastiques dans le fil de verre final est égale à 70 % en poids. Dans la majorité des cas, le fil ne contient pas de filaments thermoplastiques.

Les matières plastiques utilisables dans le cadre de l'invention sont des matières organiques thermoplastiques ou thermodurcissables, de préférence thermodurcissables.

A titre d'exemples de matières organiques thermoplastiques, on peut citer les polyoléfines telles que le polyéthylène, le polypropylène et le polybutylène, les polyesters tels que le polyéthylène téréphtalate et le polybutylène téréphtalate, les polyamides, les polyuréthanes et les mélanges de ces composés.

A titre d'exemples de matières organiques thermodurcissables, on peut citer les résines époxy, les polyesters, les vinylesters, les résines phénoliques, les polyacryliques et les mélanges de ces composés. On préfère les vinylesters car ils présentent une meilleure résistance à la corrosion.

Les fils de verre sont généralement incorporés dans la matière plastique en une proportion telle que le verre représente 15 à 80 % en volume du composite, de préférence 20 à 60 % en volume.

La présentation des fils de verre dépend de la nature de la matière plastique utilisée et du procédé mis en oeuvre. Il est possible d'utiliser les fils de verre sous forme de fils continus (par exemple sous forme de gâteaux ou de stratifils) ou coupés, de mats de fils continus ou coupés, de grilles, de voiles, de tissus ou de tricots.

Par exemple, les fils continus sont utilisés pour les applications procédant par enroulement filamentaire (dépôt du renfort imprégné de matière(s) plastique(s) sur un mandrin en rotation autour de son axe) ou par pultrusion (passage du renfort imprégné de matière(s) plastique(s) au travers d'une filière). Les fils coupés quant à eux conviennent pour la réalisation de composites par moulage au contact.

De manière générale, la matière plastique est mise en oeuvre à l'état liquide. Les composites moulés à base de matière thermoplastique peuvent être obtenus en mélangeant la matière plastique, préalablement fondue à partir de poudre ou de granulés de taille variable, et les fils de verre dans un dispositif de malaxage, et en transférant le mélange dans le moule. Les composites moulés à base de matière thermodurcissable peuvent être produits en transférant la matière liquide, non polymérisée, directement dans un moule contenant les fils de verre.

L'invention a encore pour objet les composites formés d'une matrice à base d'une matière plastique renforcée par ies fils de verre précités obtenus par ies procédés précédemment décrits d'enroulement filamentaire, de pultrusion et de moulage. Comme déjà indiqué, les composites peuvent se présenter sous la forme de tuyaux, par exemple pour la collecte et l'évacuation des eaux usées, de conteneurs et des citernes pour le transport et le stockage de matières chimiques ainsi que de revêtements de protection contre la corrosion. Les composites formés par pultrusion peuvent être utilisés en tant qu'éléments de renforcement de matières inorganiques basiques, plus particulièrement du ciment. Ces éléments de renforcement, de longueur et de section variables sont connus sous le terme « rebars » en anglais.

L'utilisation des fils de verre conformes à l'invention pour la réalisation de composites a permis d'améliorer la résistance aux milieux corrosifs, acides et basiques, qui se traduit par l'augmentation dans le temps d'au moins une propriété mécanique des composites formés par rapport aux composites obtenus à partir de fils d'un autre verre.

L'exemple qui suit permet d'illustrer l'invention sans toutefois la limiter.

### EXEMPLE 1

Des filaments de verre de 17 µm de diamètre sont obtenus par étirage de filets de verre fondu de composition suivante (en % molaire) :

| | |
|---|---|
| SiO₂ | 68,8 |
| ZrO₂ | 9,3 |
| Na₂O | 15,3 |
| CaO | 5,7 |
| Al₂O₃ | 0,1 |
| TiO₂ | 0,1 |
| CaF₂ | 0,5 |

Sur leur trajet, les filaments sont revêtus d'un ensimage aqueux conventionnel avant d'être rassemblés en fils, lesquels sont bobinés sous la forme de stratifils.

Après séchage à 130°C pendant 12 heures, les fils sont utilisés pour réaliser des plaques composites à fils parallèles conformément à la norme ISO 1268-5. La résine renforcée est une résine vinylester commercialisée sous la référence « Derakane Momentum 411-350 » par la société Dow Chemical à laquelle on ajoute, pour 100 parts en poids de résine vinylester, 1,5 part de durcisseur commercialisé sous ia référence « Trigonox 239 » par ia société AKZO, 0,08 part d'un accélérateur de polymérisation commercialisé sous la référence « NL-63-100 » par la société AKZO et 0,1 part d'un inhibiteur commercialisé sous la référence « Promotor C » par la société AKZO.

Les plaques contiennent 50 % en poids de verre et ont une épaisseur de 3 mm. Elles sont ensuite traitées à 100°C pour accomplir la réticulation complète de la résine. Les bords de la plaque sont protégés par une couche d'une résine époxy de 1 à 2 mm d'épaisseur.

Les plaques subissent un test de corrosion sous contrainte dans les conditions suivantes : deux plaques identiques sont soumises à une contrainte donnée constante en flexion trois points dans une solution acide (HCl 1 N ; 25°C) d'une part et une solution basique (NaOH 1 M ; 50°C) d'autre part pendant une durée de 100 heures.

La contrainte à la rupture est égale à 900 MPa et 710 MPa en milieu acide et basique, respectivement.

### EXEMPLE COMPARATIF 1

On procède dans les conditions de l'exemple 1 en utilisant des fils de verre E de composition suivante (en % molaire) :

| | |
|---|---|
| SiO₂ | 57,7 |
| Na₂O | 0,6 |
| K₂O | 0,2 |
| CaO | 25,1 |
| MgO | 0,4 |
| Al₂O₃ | 9,1 |
| TiO₂ | 0,1 |
| B₂O₃ | 6,7 |

| | |
|---|---|
| Fe₂O₃ | 0,1 |

La contrainte à la rupture en flexion est égale à 200 MPa et 420 MPa en milieu acide et basique, respectivement.

### EXEMPLE COMPARATIF 2

On procède dans les conditions de l'exemple 1 en utilisant des fils de verre E sans bore de composition suivante (en % molaire) :

| | |
|---|---|
| SiO₂ | 61,5 |
| Na₂O | 0,2 |
| K₂O | 0,2 |
| CaO | 25,3 |
| MgO | 5,0 |
| Al₂O₃ | 7,7 |
| Fe₂O₃ | 0,1 |

La contrainte à la rupture en flexion après traitement acide est égale à 500 MPa.

## Revendications

1. Utilisation de fils de verre de renforcement de composition suivante, exprimée en pourcentage molaire :
| | |
|---|---|
| SiO₂ | 62-75 |
| ZrO₂ | 7-11 |
| Na₂O | 13-23 |
| R'O | 1-10 |
| Al₂O₃ | 0-4 |
| B₂O₃ | 0-6 |
| Fe₂O₃ | 0-5 |
| CaF₂ | 0,5-2 |
| TiO₂ | 0,1-4 |
dans laquelle :
R'O = oxydes de métal alcalino-terreux + MnO + ZnO
et la composition renfermant moins de 0,1 % de K₂O et/ou de Li₂O
pour améliorer la résistance de matières plastiques en contact avec des substances corrosives, notamment basiques et acides.

2. Utilisation selon la revendication 1, **caractérisée en ce que** la composition de verre est dénuée de K₂O et de Li₂O.

3. Utilisation selon la revendication 1 ou 2, **caractérisée en ce que** le verre a une plage de travail définie par la différence entre la température de formage mesurée pour une viscosité η égale à 10³ Poises (T_{Log η=3}) et la température au liquidus (T_{Liq}) au moins égale à 40°C, de préférence au moins égale à 100°C.

4. Utilisation selon l'une des revendications 1, à 3, **caractérisée en ce que** la matière plastique est une matière organique thermoplastique ou thermodurcissable.

5. Utilisation selon la revendication 4, **caractérisée en ce que** la matière organique thermoplastique est choisie parmi les polyoléfines telles que le polyéthylène, le polypropylène et le polybutylène, les polyesters tels que le polyéthylène téréphtalate et le polybutylène téréphtalate, les polyamides, les polyuréthanes et les mélanges de ces composés.

6. Utilisation selon la revendication 4, **caractérisée en ce que** la matière organique thermodurcissable est choisie parmi les résines époxy, les polyesters, les vinylesters, les résines phénoliques, les polyacryliques et les mélanges de ces composés.

7. Utilisation selon l'une des revendications 1 à 6, **caractérisée en ce que** le fil de verre est sous forme de fil continu ou coupé, de mat de fils continus ou coupés, de grille, de voile, de tissu ou de tricot.

8. Utilisation selon l'une des revendications 1 à 7, **caractérisée en ce que** la teneur en verre représente 10 à 75 % en volume du composite, de préférence 20 à 80 % en volume.

9. Composite formé d'une matière plastique renforcée par des fils de verre obtenu selon l'une des revendications 1 à 8.

10. Composite selon la revendication 9 se présentant sous la forme d'un tuyau, d'une citerne ou d'un conteneur, d'un revêtement ou d'un « rebar ».

## Claims

1. Use of reinforcing glass threads with the following composition expressed as a molar percentage:
| | |
|---|---|
| SIO₂ | 62 - 75 |
| ZrO₂ | 7 - 11 |
| Na₂O | 13 - 23 |
| R'O | 1 - 10 |
| Al₂O₃ | 0 - 4 |
| B₂O₃ | 0 - 6 |
| Fe₂O₃ | 0 - 5 |
| CaF₂ | 0.5 - 2 |
| TiO₂ | 0.1 - 4 |
in which:
R'O = alkaline-earth metal oxides + MnO + ZnO
and the composition contains less than 0.1% of K₂O and/or Li₂O
to improve the resistance of plastic materials in contact with corrosive substances, particularly bases and acids.

2. Use according to claim 1, **characterised in that** the glass composition does not include any K₂O or Li₂O.

3. Use according to claim 1 or 2, **characterised in that** the working range of the glass is defined by the difference between the forming temperature measured for a viscosity η equal to 10³ Poises (T_{Log η=3}) and the liquidus temperature (T_{Liq}) that is at least equal to 40°C, and preferably at least equal to 100°C.

4. Use according to one of claims 1 to 3, **characterised in that** the plastic material is a thermoplastic or thermosetting organic material.

5. Use according to claim 4, **characterised in that** the thermoplastic organic material is chosen from among polyolefines such as polyethylene, polypropylene and polybutylene, polyesters such as terephthalate polyethylene and terephthalate polybutylene, polyamides, polyurethanes and mixes of these compounds.

6. Use according to claim 4, **characterised in that** the thermosetting organic material is chosen from among epoxy resins, polyesters, vinylesters, phenolic resins, polyacrylics and mixes of these compounds.

7. Use according to one of claims 1 to 6, **characterised in that** the glass thread is in the form of a continuous or cut thread, a mat of continuous or cut threads, a net, web, fabric or knit.

8. Use according to any one of claims 1 to 7, **characterized in that** the glass content occupies 10 to 75% of the volume of the composite, and preferably 20 to 60% of the volume.

9. Composite formed from a plastic material reinforced by glass threads obtained according to one of claims 1 to 8.

10. Composite according to claim 9 in the form of a pipe, tank or container, a coating or a "rebar".

## Patentansprüche

1. Verwendung von Verstärkungsglasfasern folgender Zusammensetzung, ausgedrückt in Molprozent:
| | |
|---|---|
| SiO₂ | 62-75 |
| ZrO₂ | 7-11 |
| Na₂O | 13-23 |
| R'O | 1-10 |
| Al₂O₃ | 0-4 |
| B₂O₃ | 0-6 |
| Fe₂O₃ | 0-5 |
| CaF₂ | 0,5-2 |
| TiO₂ | 0,1-4 |
worin:
R'O = Erdalkalimetalloxide + MnO + ZnO,
und wobei die Zusammensetzung weniger als 0,1 % K₂O und/oder Li₂O enthält, um die Widerstandsfähigkeit von mit korrosiven, insbesondere basischen und sauren Substanzen in Kontakt befindlichen Kunststoffen zu verbessern.

2. Verwendung nach Anspruch 1, **dadurch gekennzeichnet, daß** die Glaszusammensetzung kein K₂O und kein Li₂O enthält.

3. Verwendung nach Anspruch 1 oder 2, **dadurch gekennzeichnet, daß** das Glas einen Arbeitsbereich hat, der durch die Differenz zwischen der für eine Viskosität η gleich 10³ Poise gemessenen Fließtemperatur (T_{Log η=3}) und der Liquidustemperatur (T_{Liq}) von wenigstens gleich 40°C, vorzugsweise von wenigstens gleich 100°C definiert ist.

4. Verwendung nach einem der Ansprüche 1 bis 3, **dadurch gekennzeichnet, daß** der Kunststoff ein thermoplastisches oder duroplastisches organisches Material ist.

5. Verwendung nach Anspruch 4, **dadurch gekennzeichnet, daß** das thermoplastische organische Material unter den Polyolefinen, wie Polyethylen, Polypropylen und Polybutylen, den Polyestern, wie Polyethylenterephthalat und Polybutylenterephthalat, den Polyamiden, den Polyurethanen sowie den Gemischen aus diesen Verbindungen ausgewählt ist.

6. Verwendung nach Anspruch 4, **dadurch gekennzeichnet, daß** das duroplastische organische Material unter den Epoxidharzen, den Polyestern, den Vinylestern, den Phenolharzen, den Polyacrylen sowie den Gemischen aus diesen Verbindungen ausgewählt ist.

7. Verwendung nach einem der Ansprüche 1 bis 6, **dadurch gekennzeichnet, daß** die Glasfaser in Form einer durchgehenden oder geschnittenen Faser, einer Matte aus durchgehenden oder geschnittenen Fasern, eines Gitters, eines Vlieses, eines Gewebes oder eines Gestricks vorliegt.

8. Verwendung nach einem der Ansprüche 1 bis 7, **dadurch gekennzeichnet, daß** der Glasgehalt 10 bis 75 Vol.-% des Verbundwerkstoffs, vorzugsweise 20 bis 60 Vol.-% ausmacht.

9. Verbundwerkstoff, der von einem Kunststoff gebildet ist, welcher durch nach einem der Ansprüche 1 bis 8 erhaltene Glasfasern verstärkt ist.

10. Verbundwerkstoff nach Anspruch 9, der in Form eines Rohrs, eines Tanks oder eines Behälters, einer Beschichtung oder eines "Rebar" vorliegt.
